# EUROPEAN PATENT SPECIFICATION

(11) **EP 2 734 092 B1**
(45) Date of publication and mention of the grant of the patent: **25.04.2018**
(21) Application number: 12735894.3
(22) Date of filing: 19.07.2012
(51) Int. Cl.: A47J 31/40, A47J 31/60, A23G 9/04, A23G 9/30, A47J 31/44

(54) **Machine for producing cooled food products**
Maschine zur Herstellung von gekühlten Lebensmitteln
Machine de production de aliments froids

(30) Priority: 19.07.2011 IT MI20111337; 06.10.2011 EP 11184078
(43) Date of publication of application: 28.05.2014
(60) Divisional application: 18162109.5
(73) Proprietor: Nestec S.A., 1800 Vevey (CH)
(72) Inventor: GUIDORZI, Sara, I-44035 Formignana (Ferrara) (IT); RICCO, Massimiliano, I-43123 Parma (IT); UGOLINI, Marco Corrado, I-20135 Milano (IT)
(74) Representative: Elleby, Gudrun
(86) International application number: PCT/EP2012/064138
(87) International publication number: WO 2013/011078

(56) References cited:
- EP-A1- 1 890 271
- GB-A- 2 416 757
- US-A1- 2003 006 281
- US-A1- 2006 081 653
- US-A1- 2009 258 120
- US-B1- 6 705 106

## Description

The present invention relates to a machine for the production and delivery of products, preferably cooled alimentary products such as ice cream, frozen drinks, granita or the like starting from a packet of preparation associated with such a machine to obtain the product. In particular the beverage production is directed to the production of liquid or semi-liquid cooled or frozen beverages. In particular the beverage production machine can identify a product retained in a suitable container or packet through a wireless identification process, preferably by radio frequency identification, RFID, and can monitor the shelf-life of the product, in order to improve the hygiene of the beverage production.
Existing solutions for producing cooled or frozen liquid or semi-liquid beverages, like ice cream, ice coffee drinks, ice chocolate drinks, frozen cream, frozen yoghurt, sorbets, frappes and the like, typically comprise a device that has a reservoir, into which a premixed product, from which the beverages are produced, is filled, a refrigerating device for cooling or freezing the product, and a dispenser for dispensing portions of the product as the ready-to-drink beverages. The reservoir can typically be removed from the device for refilling or cleaning purposes.

Since typically a large amount of the product is filled into the reservoir, for example a volume as large as 51 or more, and since the portions of the product will thus be dispensed over a prolonged period of time, problems with hygiene or with the expiration date (or shelf-life) of the product can occur. In particular, if the temperature of the product is not constantly kept low enough, for example because the machine is shut down at night and is only activated again the next morning, it is possible that the product in the reservoir becomes spoiled. In the known machines the product which is not dispensed within a certain period of time must thus be eliminated or replaced with fresh product, since the product, once it has been prepared from special preparation bags, has a limited shelf life (usually a few days) before being subject to deterioration. Since the containers, in which the premixed product is purchased, often hold a larger volume than the volume of the reservoir, or are reused a refilling from the same container has to be carried out. Hygiene issues can occur, if between the refilling steps of the product, the reservoir is not properly cleaned, or if the shelf-life of the product expires.

Unfortunately it happens that, as a result of oversight, negligence or the desire to cut costs, not all users of such machines are diligent in respecting the expiry date of the product present in the machine. However, once the product has been prepared from the special preparation packets, it is very difficult to determine whether the prepared product has reached its maximum shelf life in the machine since this shelf life must be calculated as from the moment of preparation. This shelf life date is obviously quite different from the expiry date which is printed on the packet. Even just forgetting to make a note of the preparation date and time may result in the shelf life of the product being inadvertently exceeded, with the product continuing to be delivered even after its expiry date.

Another problem in existing solutions is that different products could be filled into a beverage production device by different persons, wherein the expiration date or shelf-life of the products could be confused or forgotten. US 6,286,724 B1 therefore suggests a cold drink system for chilling a product, wherein the system has a reservoir, named a hopper, for retaining a quantity of the product. A dispensing faucet is connected to the hopper for dispensing portions of the product. Further, a lock structure is provided that can be removed only by an authorized person. However, such a lock structure is very inconvenient to use, and does not prevent that accidentally a product is filled into the device, which has not been unambiguously identified previously (e.g. a self-mixed product) or whose shelf-life is unknown.

To identify a product, and to guarantee that the storage of the product and the preparation of beverages are carried out at optimum conditions, for example EP 2 082 649 A2 suggests monitoring the temperature of the product in the reservoir. Through an analysis of the temperature profile, the product can be identified. Additionally a user can enter settings and identification information of the product into the machine. However, the temperature monitoring and the temperature control cannot unambiguously identify the product, and do not prevent a product, whose shelf-life has already expired, from being filled into the reservoir. In this case even the temperature control cannot improve or maintain a proper hygiene.

To improve the freshness of a beverage, WO 2008/004144 A2 discloses a beverage dispensing device for making a chilled beverage that is equipped with a freshness indicator. The beverage is held in a container, can be cooled, mixed and dispensed via a tapping device. The machine comprises a display for indicating the storage temperature, the maximum storage period, the actual freshness of the beverage, the time left until expiry of the freshness and/or the date of the expiry of the freshness. To obtain the indication data the machine comprises an input unit for inputting, for example, the date of expiry, comprises means to record any replacement of the beverage container, so as to calculate the time that the beverage is already held in the container, and comprises a temperature sensor for measuring the storage temperature of the beverage. A signal processing unit can calculate, depending on the recorded storage temperature and based on the stored freshness criteria, the actual freshness of the beverage. However, the user is responsible for inputting the relevant parameters and mistakes or unauthorized inputs are possible. The beverage dispensing device is further not designed to clearly identify the product, and an update of the shelf-life or the expiry date of the product could be circumvented.

Further, the beverage dispensing device has only a freshness indicator, but proper cleaning and a supervision of hygienic standards is the responsibility of the user.

Moreover, once the product has expired, the tank must be cleaned, even when there is no more product, so as to prevent the fresh product which is to be introduced into the tank from being contaminated through contact with any residual old product which may remain inside the tank or inside the delivery pipe.

This cleaning operation is not always performed and sometimes the operator simply continues to replenish the product as it is used up.
GB 2416757 discloses a beverage dispenser apparatus with disposable reservoir associated with identification means with information on shelf life of the ingredients and active shelf life of the ingredient. The apparatus contains means for reading the information.
The object of the present invention is to overcome the disadvantages of the existing solutions described above, and to provide a beverage production machine, a beverage production method, and a container for a product that allow for an improvement of the hygiene in the production of semi-liquid or liquid cooled or frozen beverages or liquid foods. In particular, the aim is to provide a way to prohibit any production of beverages, for which the shelf-life has expired, e.g. to ensure, with a suitable degree of reliability, more correct use in relation to the expiry date of the prepared product. A further object of the invention is to provide a beverage machine, for which refilling procedure is more convenient. A further object is to provide a container or packet for such a machine. A further object is also to provide a beverage production method and a control method for a machine of the abovementioned type which is able to achieve, with a suitable degree of reliability, correct use thereof in relation to the expiry date of the prepared product.
The above objective problem can be solved by the independent claim of the present invention. The dependent claims further advantageously develop the invention.

The present invention relates to a machine for production and delivery of ice cream, frozen drinks or granite starting from a packet of preparation associated with such a machine according to the independent claim.

Due to the fact that the product mode can only be activated, if the product is unambiguously identified, the machine can prevent that accidently or intentionally a spoiled product is filled into the machine and is used to prepare a beverage. The identification information and the shelf-life information are provided for example on an RFID chip or tag (in the following also referred to as information retention means) of a container (in the following also referred to as packet), in which the product is purchased. The identification information and shelf-life information should be verified and authorized by the distributor of the product. Via the RFID reader the beverage production machine can be securely and easily provided with the shelf-life information, and the setting of the shelf-life counter prevents a portion of the product to be dispensed, if the shelf-life has expired. The user does not actively have to take the responsibility of monitoring the shelf-life of the product, but rather the machine provides an automatic monitoring function.

Specific identification information of a container holding a product, and the corresponding shelf-life information, can be used only once to open the machine for (re) filling and for starting a product mode cycle (a product mode cycle starts with the setting of the shelf-life counter and ends latest with the expiration of the shelf-life). It can be prevented that a container is refilled with an unknown liquid from the same container, from an already opened container, or with a spoiled product. The beverage production machine can be provided with specifically designed means that monitor the received identification information, and thus prevent a multiple usage of the same identification information. Due to the possibility to transmit the identification information and the shelf-life information via, for example, RFID, an input unit can be omitted. Therefore, the machine can be set into an operation mode faster, and is more convenient to operate.

Preferably, the control means are adapted to continuously decrease the value of the shelf-life counter in the product mode, wherein the beverage production machine further comprises a display (in the following also referred to as user interface), wherein the display has a shelf-life indicator for displaying the value of the shelf-life counter, and wherein the display has an alarm indicator for issuing a first warning signal, if the shelf-life counter value is below a second threshold value.

As soon as the machine is in the product mode, i.e. the product has been identified, and the shelf-life counter has been set, a portion of the product can be dispensed and a continuous decrease of the value of the shelf-life counter ensures that an automatic monitoring of the expiration date is carried out by the machine. The shelf-life indicator is optional and can further provide the user with the relevant information on the expiration date of the product, and optionally the warning can be issued as soon as the counter value falls below a second threshold value. The warning warns the user of the necessity to clean the reservoir soon, and to fill in a new product or a product from a new container.

Preferably, the beverage production machine further comprises a temperature sensor for measuring the temperature of the product in the reservoir, wherein the display has a temperature indicator for showing the measured temperature, and wherein the alarm indicator is adapted to issue a second warning signal, if the measured temperature is above a first threshold temperature.

The temperature sensor can ensure that the product is held constantly at a low enough temperature, so that the product does not get spoiled, before its nominal expiration date is reached, i.e. before the shelf-life counter value reaches the first threshold value. An unwanted increase in temperature can for example occur, if the cooling means do not function properly or if the beverage production machine is positioned badly, e.g. close to a radiator or exposed to sunshine. The temperature indicator is optional. The warning signal is preferably issued as soon as the temperature exceeds a certain measured temperature, i.e. above a first threshold temperature, that is still low enough that the shelf-life information of the product maintains its validity.

Preferably, the reservoir has an opening (in the following also referred to as opening or filling opening) and a lockable lid (in the following also referred to as lid or closing lid) for exposing or covering the opening, wherein the control means are adapted to detect and control the lock state of the lid, and wherein the display has a lid indicator for indicating whether the lid is locked or unlocked.

Due to the fact that the lid can be locked, the refilling of a product can only be carried out, if a product has been identified successfully, wherein the identification unlocks the lid. The beverage production machine can show optionally on the display, whether the lid is locked or not. The opening is preferably constructed in a way that a product can be filled in easily, i.e. without spilling any product, for example by matching or adapting the opening to the mouth of the container, in which the product is purchased.

Preferably, the control means are adapted to set the product mode of the beverage production machine, wherein in the product mode the cooling means are activated, the lid is locked, the temperature indicator is activated, and the shelf-life counter and the shelf-life indicator are activated.

In the product mode the cooling means ensure that the product is cooled to a sufficiently low temperature that guarantees that the shelf-life information of the product is valid. For monitoring purposes the indicators and the counter are naturally turned on during the product mode. The lid is locked, and a filling can only be carried out, if the product mode is interrupted, new identification information is successfully provided, and finally the product mode is resumed.

Preferably, the control means are adapted to set a standby mode of the beverage production machine, wherein in the standby mode the cooling means are not activated, the temperature indicator is not activated, and the shelf-life counter and the shelf-life indicator are not activated.

The standby mode is a mode, in which the machine is clean (has just been cleaned), is ready to be filled with a product, and is ready to start a new product mode cycle. To save energy the cooling means are not activated, and since no shelf-life information of the product has yet been provided, i.e. received by the machine, the respective indicators and the shelf-life counter are turned off.

Preferably, the control means are adapted to set a cleaning mode of the beverage production machine, wherein in the cleaning mode the cooling means are not activated, and the lid is unlocked.

In the cleaning mode the machine has finished a product mode cycle, that means the shelf-life of the product has expired and the machine is required to be cleaned. Therefore, the lid naturally has to be unlocked. After cleaning the machine can go back to the standby mode.

Preferably, the control means are adapted to set the product mode of the beverage production machine, if the product is identified based on the identification information in the data received by the RFID reader.

The connection of the product mode with the requirement of a valid identification of the product guarantees that no unknown product, for which consequently the shelf-life is not known, is used. This strongly improves the hygiene in the machine.

Preferably, the control means are adapted to automatically set the cleaning mode of the beverage production machine, if the value of the shelf-life counter is equal to or lower than the first threshold value.

If the shelf-life of the product has expired, the machine is automatically set into cleaning mode. The cleaning mode can only be left, if the reservoir is cleaned and if a new product is filled into the reservoir. Thus the machine guarantees that never any beverage is produced from a product whose shelf-life has expired.

Preferably, the control means are adapted to detect a removal of the reservoir, and to set the standby mode of the beverage production machine, only if the reservoir has been removed for longer than a first threshold period.

The machine thus ensures that the reservoir is really cleaned. Only then can the product mode be entered again from the standby mode and the refilling procedure can be carried out. Naturally other means to detect that the reservoir has been really removed and/or cleaned can be implemented. Suitable sensors could even distinguish directly between a clean state and a used state. For example a light source or light sensor could be used to detect product residues.

Preferably, the control means are adapted to automatically set the cleaning mode of the beverage production machine, if the measured temperature is above a second threshold temperature for longer than a second threshold period.

After the product has been above a certain temperature for too long, the validity of the shelf-life information can no longer be guaranteed. By setting the machine into the cleaning mode, the user is required to clean the reservoir and to reenter the product mode to refill the product.

Preferably, the control means are adapted to unlock the lid for refilling the product in the product mode, if the product to be refilled is identified based on identification information in further data received by the RFID reader.

The refilling takes place in the product mode, and a new product mode cycle can only be entered, if the product is identified and if the shelf-life information is obtained. The identification information of a new product cannot be the same as the identification information of a product previously used, i.e. a container previously used. Specific identification information of a product, i.e. a container, can be used only once to start a product mode. Thus, an accidental or intentional refilling with an unknown or spoiled product from the same container is prevented.

During the product mode, in order to unlock the lid and to refill product, the product mode first has to be interrupted. Then new identification information has to be provided, and the product mode can be resumed without cleaning the reservoir, if both the new shelf-life information and the previous shelf-life information have not yet expired. If the reservoir is filled multiple times during a product mode cycle, all shelf-life information obtained via the RFID reader has to be valid. The value of the shelf-life counter is determined and set according to the shelf-life information that yields the lowest value, i.e. expires the soonest. Only if at a refilling step shelf-life information is detected by the control means, which would correspond to a lower value than the current value, the value of the shelf-life counter is overwritten.

A container for a product comprising an RFID tag for providing data that comprises identification information and shelf-life information of the product in the container.

The container is typically suited to hold a larger amount of product, e.g. about 51. The RFID tag of the container can be certified and verified by the distributor of the container. High security standards are preferably used to attach the tag to the container, and to write the information into the tag, so that it is ensured that the information transmitted via the RFID tag really corresponds to the product in the container. The tag cannot be recorded with new information without an authorization code. It could also be thinkable that the container provides means that detect the breaching or opening of the container, and that the identification information and the shelf-life information in the RFID tag are only valid for a predetermined amount of time, after the container have been bridged. The RFID tag might therefore be provided with a counter. The freshness and hygiene standards of the product, when filled into a beverage production machine, can thus be improved.

Preferably, the container further comprises a mouth and a removable cap for covering the mouth, wherein the cap is removable only, if the data is successfully read from the RFID tag by an RFID reader.

Only if the product in the container has been identified and if its shelf-life information has been recorded by a beverage production machine, the product in the container can be used. The cap can be further constructed in a way that it cannot be put back on, or it can be constructed in a way that after the container is emptied, it cannot be refilled anymore.

In view of the above mentioned objects the disclosure is also to provide a machine for the production and delivery of products such as ice cream, frozen beverages or granita using a preparation packet associated with this machine in order to obtain the product, comprising a product-containing tank which is provided with a tap for delivering the product and which contains an element for cooling the product and a powered mixer element (in the following also referred to as agitating means, stirring element or mixer) for stirring the product, characterized in that it comprises a control unit which is provided with means for acquisition (i.e. acquisition means) of information relating to the shelf life of the product - once the latter has been obtained from the preparation - from information retention means which are associated with a preparation packet, the control unit controlling operation of the machine according to said acquired information.

Still in accordance with the said objects the idea which has occurred is to provide a preparation packet for the production of a product such as ice cream, frozen beverages or granita in a machine for the production and delivery of these products, comprising associated means for retention of information relating to the shelf life of the product once it has been obtained from the preparation, said information being intended to be acquired by the machine for controlling operation thereof.

Finally the idea which has occurred is to provide, in a machine for the production and delivery of products such as ice cream, frozen beverages or granita using preparation packets associated with this machine, a control method for preventing use of the product beyond a shelf life date as from the time of preparation of the product in the machine, comprising the steps of: associating with the packets means for retention of information relating to the shelf life of the product once the latter has been obtained from the preparation introduced into the machine; providing the machine with means for acquisition of information from said retention means; acquiring, by the machine, of said information so as to enable its fully functional state for production and delivery of the product; automatically disabling this fully functional state of the machine when the end of the shelf life indicated by said acquired information is reached.

In summary the present invention increases the hygiene standards of a beverage production machine or (control) method, and prevents the production of a beverage from a product, which is unknown or is spoiled. The product cannot be kept in a machine longer than its shelf-life. The machine is convenient to use, since it takes responsibility of monitoring and receiving the relevant information, in order to keep up the high hygiene standards. The solution of the present invention has a low impact on cost of products and equipment and can thus ensure business profitability.

In the following the present invention is explained in more detail by embodiments also in relation to the attached figures and drawings.
Figure 1a shows a beverage production machine according to a first embodiment of the present invention.
Figure 1b shows a container.
Figure 2 shows a display of the beverage production machine of the present invention.
Figure 3 shows a block diagram of the beverage production machine of the present invention.
Figure 4 shows modes of the beverage production machine of the present invention.
Figure 5 shows a mode cycle of the beverage production machine of the present invention.
Figure 6 shows additional modes of the beverage production machine of the present invention.
Figure 7 shows a flow diagram of a beverage production method.
Figure 8 shows a refilling process from a container to the beverage production machine of the present invention.
Figure 9 shows a schematic perspective view of a machine according to a second embodiment of the present invention.
Figure 10 shows a schematic sectioned view of the machine according to Figure 9, with a block diagram of an internal control unit.

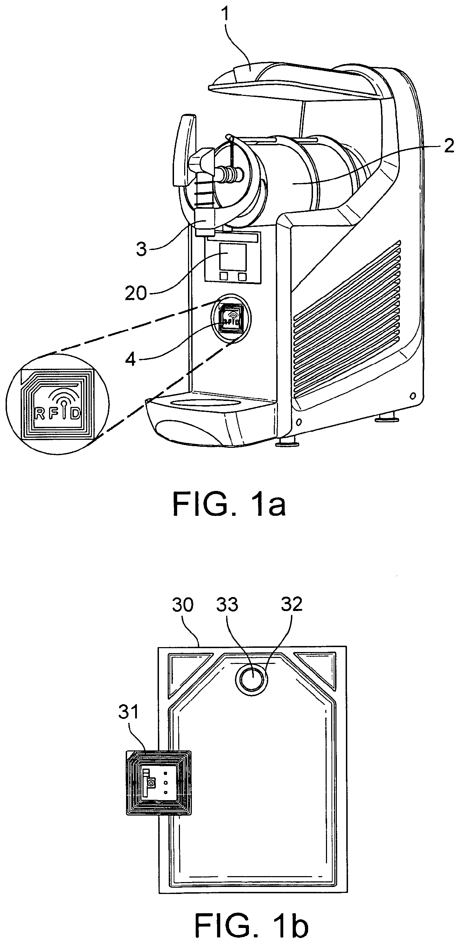

Figure 1a shows a beverage production machine 1 according to the present invention. The beverage production machine 1 can generally be designed similar to known beverage production machines 1, in that it has a housing, a plurality of feet, a dip tray, one or more ventilation openings, a power supply, etc. as illustrated. The beverage production machine 1 can, however, have a different design, shape or arrangement of features compared to the machine shown in figure 1a. What is essential is that the beverage production machine 1 comprises a removable reservoir 2 for holding a product, like a solid, semi-liquid or liquid product.

The reservoir 2 can be any suitable tank material, e.g. glass, Perspex, metal or plastic, that is able to hold typical products. The reservoir 2 can be provided with one or more coating layers that make it easy to clean and/or isolate the product from the reservoir material for improving hygiene. The one or more coating layers can further help to insulate the product against the outside temperature, or to protect it from light. The reservoir 2 is preferably removable from the beverage production machine 1, but could be designed in a way so that it cannot be removed during the operation, i.e. during the product mode, of the machine 1, or so that it can only be removed in a specific mode of the beverage production machine 1. Various machine modes will be described later.

The product in this case is preferably a premixed product for ice cream, a frozen milk product, a sorbet, frozen fruit juice product, or any other cooled or frozen liquid, solid, or semi-liquid product or food known in the art. However, the idea of the present disclosure is not limited to such beverage products, and can also be applied for classical coffee machines, coffee machines that work with capsules, tee machines, beer dispensers, fruit juice or lemonade dispensers or the like. The beverages produced from the product need not necessarily be cooled or frozen. Also for heated beverages shelf-life information could be monitored. The reservoir 2 has a dispenser 3 that is connected to the reservoir 2, and is adapted to open and close an outlet from the reservoir 2. Thus, a portion of the product can be dispensed through the dispenser 3. The dispenser 3 can be an electrically or mechanically operated dispenser 3. It can also be a hand-operated dispenser 3, like a tap device or a screw cap. Further, it can allow any desired portion of the product to be dispensed. Alternatively, it can be controlled to dispense predetermined portions of the product. The dispenser 3 can further be provided with filters, for example to increase the hygiene of the dispensed beverage, or to prevent ice particles or ice cubes from being dispensed with the product. The dispenser 3 can also be equipped with means to froth the dispensed product, e.g. by a suitable filter or other frothing means. The dispenser 3 can be mechanically blocked or electrically deactivated, as long as the machine 1 is not in the product mode. The dispenser 3 can be integrated with the reservoir 2, or can be fixed to the housing of the machine 1, so that the reservoir 2 is individually removable from the beverage production machine 1. The dispenser 3 is, however, preferably removable form the beverage production machine 1 as well, for cleaning purposes.
The beverage production machine 1 is further equipped with cooling means 5 and with agitating means 6. Both the cooling means 5 and the agitating means 6 can be provided inside of the removable reservoir 2, but are preferably provided in a way that the removable reservoir 2 can be removed without removing the cooling means 5 and the agitating means 6. This makes it easier to clean and refill the reservoir 2.

The cooling means 5 are used to cool or freeze the product. Preferably, temperatures in a range of -5° to +10°, more preferably -10° to +20° can be reached. The cooling means 5 can be conventional refrigeration devices or freezers as in conventional ice machines or beverage production machines for frozen beverages. The cooling means 5 preferably cool the product via cooling of the reservoir 2. It is thus desired that the reservoir 2 is made of a high thermal conductivity and a low heat capacity material, so that the product can be cooled efficient and rapid. The cooling means 5 is further preferably thermally isolated against the rest of the machine 1 to efficiently cool the product.

The agitating means 6, or an agitator, are used to stir or agitate or mix the product, in order to ensure a homogeneous composition of the product, and to ensure the homogeneity of the temperature of the product. The agitating means 6 can be for example a rotating stirrer or mixer with one or more blades that stir the product. The stirrer is inserted into the reservoir 2, when the reservoir 2 is attached to the machine 1. The agitating means 6 in the reservoir 2 can also be driven magnetically or in an otherwise contactless manner, so that no bore or hole to the outside of the reservoir 2 have to be provided. Even when sealed, the product could exit the reservoir 2 in the machine 1 through such a bore and compromise the hygiene. The agitating means 6 could also be provided from the top, e.g. through the opening 10 of the reservoir 2. The agitating means 6 can also be realized by means that constantly shake, rotate or turn the reservoir 2 to agitate the product. With such a solution, no agitating means 6 would have to be inserted into the product, thus increasing the hygiene.

The beverage production machine 1 further has an RFID reader 4, which can communicate with other external RFID tags 31, via electromagnetic coupling, and can receive and send data from/to the RFID tags 31. The RFID reader 4 is at least able to read out data from an RFID tag 31 via wireless magnetic coupling. An example of an RFID tag 31 is shown in figure 1b. The RFID tag 31 can for example be integrated securely into a container 30, in which the product that is to be filled into the reservoir 2 is purchased. By holding the RFID tag 31 in close proximity to the RFID reader 4, coupling and a data communication between the RFID elements can be carried out.
The electromagnetic waves, which are utilized to wirelessly couple the RFID reader 4 to RFID tags 31 and to read out the RFID tag 31, preferably have a frequency of 30 kHz to 3 GHz. The power of the electromagnetic waves should allow for data transmission across a distance of preferably at least 5 to 50 cm. The electromagnetic waves can have linear or circular polarization. In particular circular polarization can facilitate the data transmission, because the tag 31 can be positioned in front of the RFID reader 4 in an arbitrary orientation. Linear polarization requires specific positioning but can increase the signal to noise ratio and thus the distance.

The beverage production machine 1 further has control means 7 that control, amongst other functions, the communication process of the RFID reader 4. The control means 7 can be a suitable processor or a micro processor or a similar calculating or processing unit. The control means 7 can be further equipped with a memory, for example a RAM or a ROM, to store temporarily or permanently data that is necessary to perform the data communication. For example, the memory can store certain identification numbers of different RFID tags, with which a communication can be allowed, or can store an algorithm for an authentication procedure that is performed before reading out an RFID tag. The control means 7 can also be an array of processors, where each processor is specifically designed to control a certain function of the machine 1.

The RFID reader 4, under control of the control means 7, acquires from the RFID tag 31, optionally after an authentication procedure has been carried out between the control means 7 and the RFID tag 31, at least identification information and shelf-life information of the product in the container 30. The received data can also include further information on the product, for example information on flavor, amount, quality grade, price, the producer or distributor of the product, the filling date, the expiry date, optimum production parameters, optimum temperature parameters or the like.

When the RFID reader 4 has received the data, the control means 7 can store and/or evaluate the received data. In particular, the control means 7 are able to identify the product based on the identification information received with the data. The identification can be carried out for example based on pre-stored numbers or pre-stored information, with which the control means 7 compare the identification information. Alternatively, it can be carried out through a pre-stored algorithm that returns a "valid" or "invalid" identification result.

The data communication between the RFID reader 4 and the RFID tag 31 is preferably designed in a way that each RFID tag 31 can be read out only once, or at least in a way that specific identification information can be used only once, at least can be used only once for starting the product mode of the machine 1. This can be realized, for example, by storing previously acquired identification information permanently into the memory, and by comparing - each time new identification information is obtained - the acquired information with the information stored in the memory. Only if newly acquired identification information is found not to be stored in the memory, the product is validly identified by the control means 7.

The control means 7 further evaluate the shelf-life information, and store the relevant shelf-life information in a memory. The control means 7 can further calculate the expiry date, and store the same in a memory. The control means 7 further have a shelf-life counter 8, which is set to a value according to the shelf-life information. Alternatively the control means 7 are connected to such a shelf-life counter 8. Shelf-life information can for example be a number of days, to which the shelf-life counter is set. The shelf-life information is however not limited thereto, but can be a number of hours or minutes until expiry, or can be a certain calendar expiration date. The machine 1 can also comprise several shelf-life counters 8 that are associated with different types of shelf-life information. The shelf-life counter 8, for example, decreases its value continuously, independently or under direct control of the control means 7, if the shelf-life information is e.g. a remaining number of days, weeks or months. If the shelf-life information is a different value, the shelf-life counter 8 could also continuously increase its value. In the following description, however, only examples of decreasing the value of the shelf-life counter are explained, but the skilled person will easily understand how to implement the same invention with a continuously increasing shelf-life counter value.

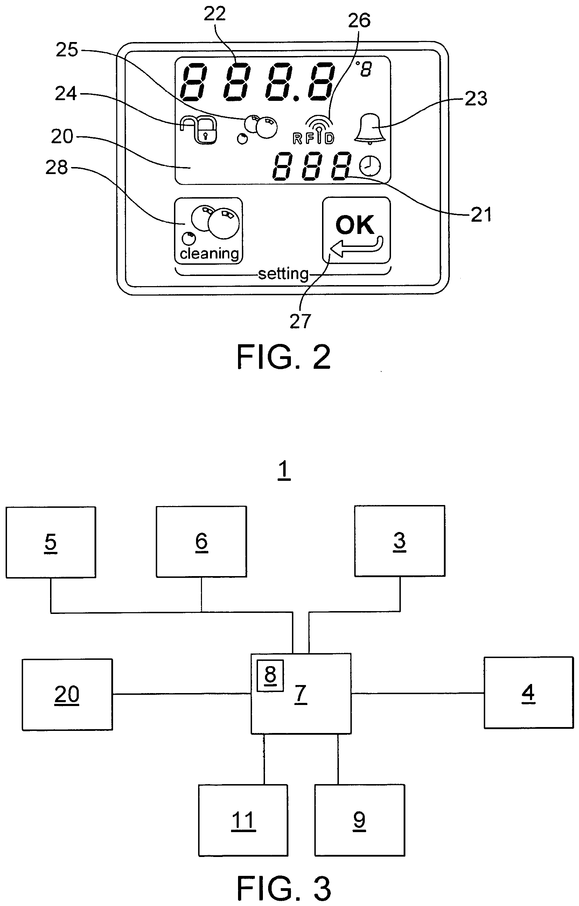

The beverage production machine 1 shown in figure 1a further comprises a display 20. The display 20 is shown in more detail in figure 2, and has for example a shelf-life indicator 21 for displaying the value of the shelf-life counter 8, has a temperature indicator 22 for showing the temperature of the product in the reservoir 2 (the temperature is measured with the temperature sensor 9), comprises an alarm indicator 23 for issuing warning signals, has a lock signal 24 indicating whether a lockable lid 11 covering an opening 10 of the reservoir 2 is locked or unlocked, comprises an RFID indicator 26 for showing whether currently a data communication to and/or from the RFID reader 4 is carried out, and comprises a cleaning indicator 25 for indicating that the reservoir 2 has to be cleaned, i.e. the machine 1 is in the cleaning mode. The display 20 does not necessarily need to comprise all of the above indicators. However, the display 20 is also not limited only to the above-described indicators.

A control panel could also be installed in or on the display 2, and can consist of at least a cleaning button 28 and a confirmation button 27. The buttons 27 and 28 can also be arranged at positions different from the position of the display 20 on the beverage production machine 1.

In figure 1a is shown how the display 20 and the RFID reader 4 are preferably located on the front of the beverage production machine 1. However, the invention is not limited thereto, and the display 20 and the RFID reader 4 can also be located on the top, the side or the back of the beverage production machine 1. They can also be arranged on different sides of the machine 1. It has to be only ensured that the display 20 is easy to read for a user. The RFID reader 4 can also be inside the beverage production machine 1, i.e. can be hidden from sight. However, even in this case preferably a symbol, as shown in figure 1a, is provided to indicate to the user, where to preferably hold the tag 31 of a container, in order to perform a data transmission.

Figure 3 shows a block diagram of the beverage production machine 1, and shows how the control means 7 control the operation of the beverage production machine 1. The control means 7 are wired or connected wirelessly to the cooling means 5, the agitating means 6 and the dispenser 3, in order to operate them when necessary. The control means 7 can also receive feedback from the means 5, 6 and 3, for example in case one of the means has a malfunction. The control means 7 are further wired or connected wirelessly to the temperature sensor 9, and can continuously or repeatedly receive temperature readings from the sensor 9. The control means 7 can use the temperature readings of the temperature sensor 9 to control the cooling means 5 of the machine 1. The control means 7 are further connected to the RFID reader 4 and to the display 20, control a data transmission via the RFID reader 4, and control settings and indications of the display 20. As shown further, the control means 7 can be provided with the shelf-life counter 8, which can either be integrated into the control means 7 or can be a separate device. The shelf-life counter 8 can be any conventional counter or any clock that is suitable to increase or decrease an analogue or a digital value. Finally, the control means 7 can be connected to the lid 11, respectively a sensor that monitors, whether the lid 11 is closed over the opening 10 of the reservoir 2 or is open. A conventional position sensor can be used for these purposes. The lid 11 can also be integrated with such a sensor.

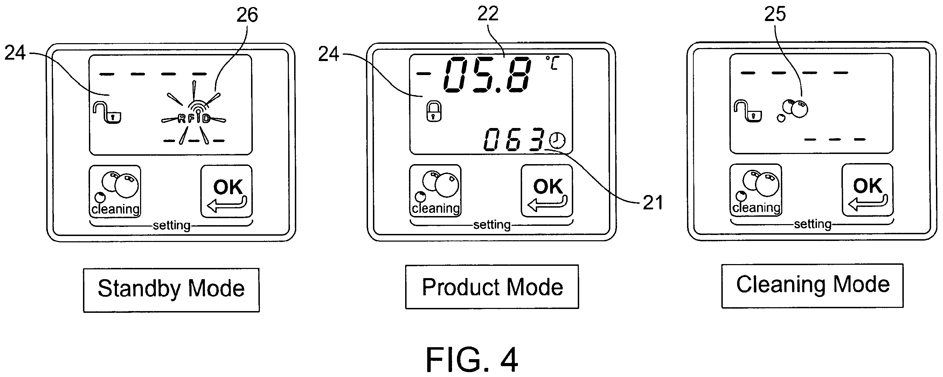

In the following, the operation of the beverage production machine 1 in its relevant operation modes is explained. Figure 4 shows the display 20 in three specific operation modes of the beverage production machine 1. The beverage production machine can be set by the control means 7 into at least a standby mode, a product mode, and a cleaning mode. In the standby mode the machine is clean, is ready to be filled with a product, and is ready for starting a product mode cycle. In the product mode the machine works at least until the shelf-life counter 8 decreases below a first threshold value. In the product mode it is possible to serve beverages by dispensing the product through the dispenser 3. In the product mode the shelf-life counter 8 decreases continuously from an initial value set according to the shelf-life information, and as soon as the first threshold value is reached the product mode is exited to the cleaning mode. In the cleaning mode the machine has finished a product mode cycle, for example, because the shelf-life counter 8 has reached the first threshold value and needs to be cleaned.

In the standby mode the cooling means 5 do not work, the agitating means 6 are stopped, and both the temperature indicator 22 and the shelf-life indicator 21 are inactive. As shown in the left picture of figure 4, the RFID indicator 26 is emitting a signal, for example it flashes or blinks, and indicates that an identification and a data transmission with an RFID tag has to be carried out. The lid indicator 24 indicates in this case that the lid 11 is still unlocked, and that the machine is ready to be (re)filled. The standby mode of the beverage production machine 1 is always set, when the machine 1 is switched on, or after a cleaning mode of the machine 1 has been exited.

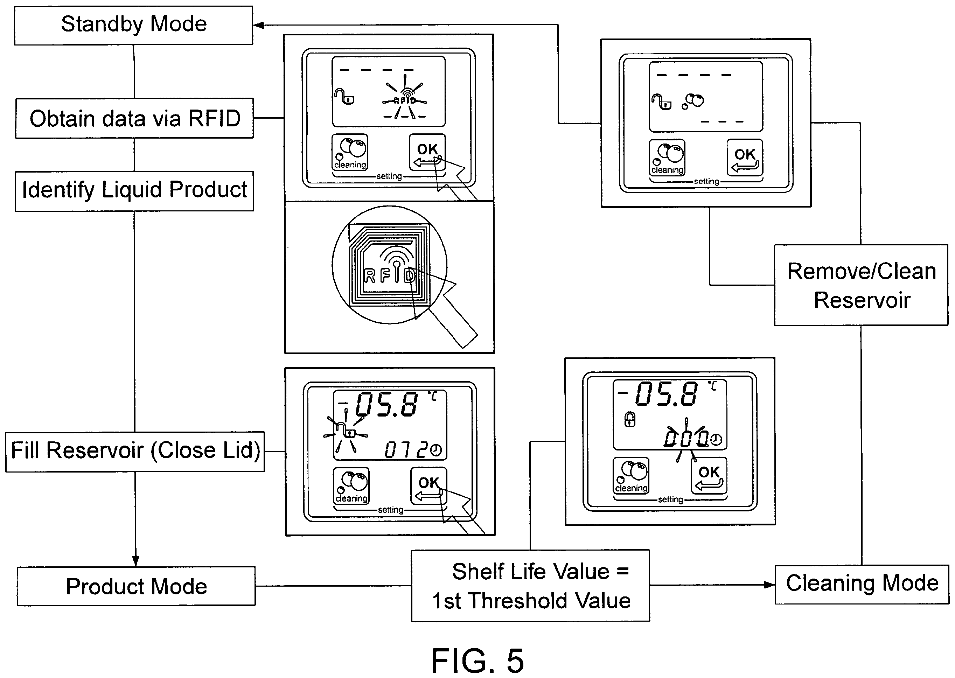

In order to leave the standby mode, as is shown in figure 5, the RFID reader 4 first has to receive data, and the product has to be identified. Therefore the tag 31 of the container 30 has to be brought in proximity with the RFID reader 4, and the confirmation button 27 is optionally to be pressed. The pressing of the button 27 is however not necessarily required, and an automatic detection can take place. Typically the flashing or blinking RFID indicator 26 becomes fixed for a predetermined amount of time, for example two seconds, and after the time has elapsed the data transmission is complete, and the reading is confirmed, for example by an issued acoustic signal like a beep. However, also other signals and indications can be provided.

The control means 7 next identify the product in the container 30 based on identification information included in the received data, and set a value of the shelf-life counter 8 according to the shelf-life information, both received in the data transmission. Now a state on the display 20 shows the current temperature in the reservoir 2, which is measured and monitored by the temperature sensor 9, and shows the value of the shelf-life counter 8. To complete the process of exiting the standby mode the user has to fill product into the reservoir 2, has to close the lid 11, and optionally has to press a confirmation button 27. Then the control means 7 set the beverage production machine 1 into the product mode.

In the product mode the cooling means 5 and the agitating means 6 are always active, the lid 11 is always locked, and the temperature indicator 22 and the shelf-life indicator 21 are always active. Additionally the shelf-life counter 8 continuously decreases the shelf-life value from values set initially according to the shelf-life information. In the product mode a user can operate the beverage production machine 1 to dispense portions of the product through the dispenser 3. Therefore, typical controls, as can be in conventional beverage production machines 1, can be provided. For example the control panel of the machine 1 can be provided with buttons for dispensing differently sized portions of the product, or different types of products. The temperature could additionally be set manually by a user. Alternatively, for reducing a beverage the control means 7 read optimum parameters stored in accordance with the identification information of the product, and produce the portion of the product accordingly.

In the product mode the user can refill the reservoir 2, if it is empty, without cleaning only if the shelf-life counter has not reached the first predetermined threshold value. That means if the product has not reached its expiration date. Therefore, the user operates a dedicated button to interrupt or leave the product mode, then has to provide new identification information for a further product via the RFID reader 4, and finally can resume the product mode after refilling by pressing a dedicated button. Optionally, a specific amount of time can be subtracted from the shelf-life counter value 8, when regarding whether a refilling without cleaning of the reservoir 2 is allowed. This function presents a security buffer. For example, 24 hours could be subtracted, in order to ensure that the shelf-life counter value 8 will not reach the first threshold value for the next full day.

If the value of the shelf-life counter 8 reaches the first threshold value, i.e. is equal to or lower than the first threshold value, the control means 7 automatically set the beverage production machine 1 into the cleaning mode. The first threshold value can for example be zero, i.e. the expiry date of the product has been reached. Alternatively a security buffer can be added to the first threshold value. In the cleaning mode it is necessary to clean at least the reservoir 2. Therefore, the reservoir 2 has to be removed for longer than a first threshold period from the machine 1, for example for a certain number of minutes. The removal presents an indirect indication that the reservoir 2 has been cleaned. The control means 7 can detect the removal of the reservoir 2, for example by a magnetic sensor, a touch sensor, a position sensor or any other suitable sensor. Also direct means to detect whether the reservoir 2 has been cleaned can be employed, e.g. a light sensor that detects residues of product, or a biosensor that can detect the presence of products or alternatively small amounts of a detergent or the like.

After the reservoir has been removed and cleaned, the control means 7 can set the beverage production machine 1 into the standby mode. In the standby mode, in order to refill the product into the reservoir 2, i.e. to unlock the lid 11, a reentering of the product mode is required and a further data transmission process via the RFID reader 4 is necessary. The control means 7 has to evaluate the transmitted data, and has to identify new identification information. Specific identification information of a product, i.e. a container 30 holding the product, can be used only once to enter a product mode of the beverage production machine 1. Only after the control means 7 have identified a new product based on new identification information, and have set the shelf-life counter 8 according to the acquired new shelf-life information, the lid 11 is unlocked, as indicated by the corresponding indicator 24, and the new product can be filled into the reservoir 2. Optionally a control button has to be pressed at the end, so that the product mode can be entered and a new product mode cycle is started.

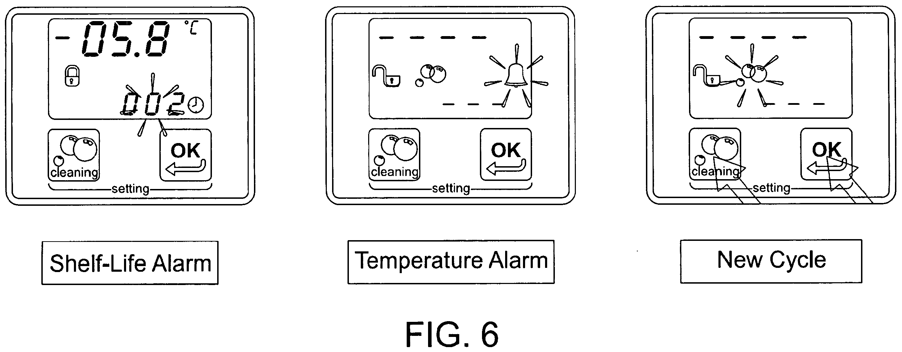

Figure 6 shows additional modes that can improve the hygiene of the beverage production machine 1. The left most picture in figure 6 shows the alarm indicator 23 blinking or in general issuing a warning signal, if during the product mode the value of the shelf-life counter 8 falls below a second threshold value. The shelf-life indicator 21 can emit an optical or acoustic signal, for example it can flash or emit a sound to warn the operator that soon the expiry date of the product will be reached. The alarm mode can be disabled by pressing, for example, the confirmation button 27.

The middle picture of figure 6 shows a case, in which during the product mode, for example due to the lack of electricity or due to a damaged cooling means 5, a second threshold temperature is exceeded for a second threshold period. This second threshold temperature can for example be set to 0 degrees, in case frozen products are to be dispensed. Additionally, or optionally, the control means 7 are adapted to stop the operation of the beverage production machine 1, i.e. to exit the product mode and to enter the cleaning mode, if such an event occurs.

The right picture in figure 6 shows, how a product mode cycle can be ended manually, e.g. if the shelf-life has not yet expired but the product in the reservoir 2 has been completely dispensed. Or, if the shelf-life has not enough remaining time left to allow a safe refilling. Then the user can, for example, press the cleaning button 28 and the confirmation button 27 at the same time, in order to switch the beverage production machine 1 into cleaning mode. Other combinations of buttons or single button functions are also possible. By the way, pushing the same two buttons 28 and 27 in the product mode, could select the scale or the units of the temperature in the temperature indicator 22. For example, Celsius or Fahrenheit could be toggled, or other operating parameters could be adjusted.

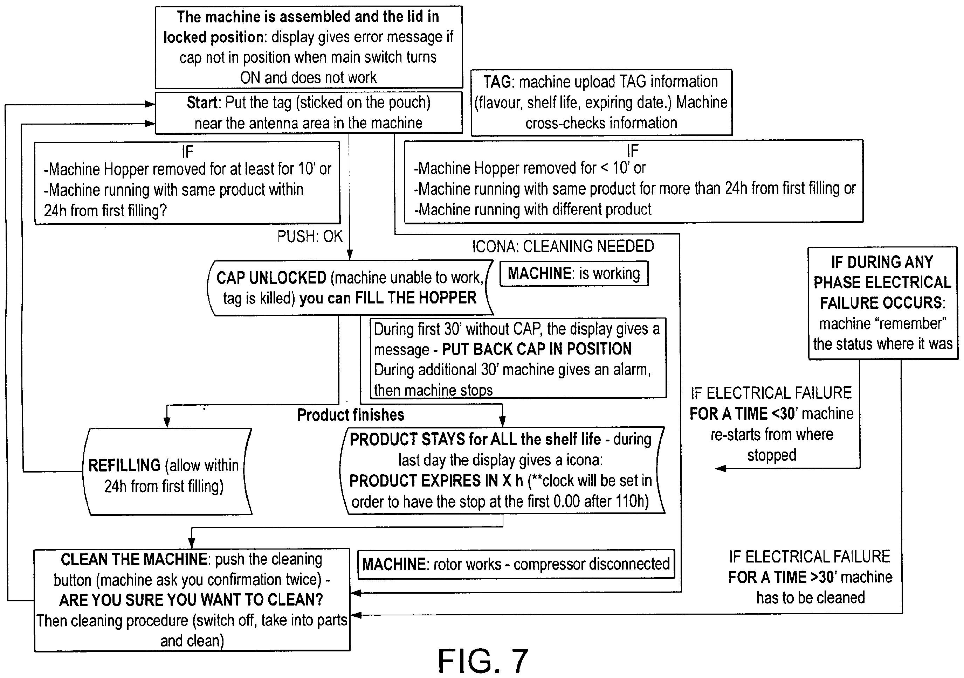

Figure 7 shows a specific example of a work flow diagram of a beverage production method that can be carried out in the beverage production machine 1 of the present invention or by any other suitable device. Values in the following example could also be chosen differently.

Initially the machine is in an assembled state and the lid 11 is in a locked position. The display 20 of the machine 1 indicates an error message, if the cap 33 is not in position when the machine 1 is switched on. The machine 1 also does not work. To start the machine 1 the tag 31 (on the pouch) is to be brought into proximity with the RFID reader 4. Optionally, the confirmation button 27 is to be pressed. The machine 1 uploads information such a flavor, shelf-life and expiry date from the tag 31 and cross-checks the information. A determination is made next, if the machine has worked in a cleaning mode for, for example, at least 10 minutes. In particular, the machine 1 determines, if the reservoir 2 has been removed for at least 10 minutes. The machine 1 also determines at this stage, whether the machine is still running within the first 24 hours measured from the first filling. If the machine 1 determines that the reservoir 2 has not been removed for more than 10 minutes or that the machine 1 has been running for more than 24 hours with the same product from first filling (or a different product from the first filling), the control means 7 set the machine 1 into cleaning mode indicating that the machine has to be cleaned. To clean the machine the cleaning button 28 is now to be pushed twice (once for confirmation). Then the machine 1 is switched off, can be disassembled, and can be cleaned.

However, if at the above determination step the machine 1 determines that the reservoir 2 has been removed for at least 10 minutes or that the machine 1 is still running within the first 24 hours since the first filling with the same product, the cap 11 is unlocked. The unlocking of the cap 11 makes the machine unable to work. The display 20 of the machine indicates that the cap 11 is unlocked. The display 20 can further ask the user during a predetermined time period e.g. for 30 minutes, to put the lid 11 back in the closed position. After the predetermined time period has expired, the machine 1 can issue a warning or an alarm signal, and stops. The tag 31 can be invalidated or blocked for further use. The reservoir 2 can now be filled by a user with a new product..

After filling a product into the reservoir 2, the machine 1 can be operated to dispense the product. At some point two scenarios are possible. One scenario is that the product finishes, i.e. is dispensed completely, and a refilling of the product is still allowed. This can be the case, for example, at any time within the first 24 hours from the first filling of the product. The above-described work flow (starting from providing a tag 31) can in this case be repeated, as shown in fig. 7.

Another scenario is that the product stays in the machine 1, i.e. is not completely dispensed, for its complete shelf-life.

That means the shelf-life expires before the product is dispensed completely. At some point, e.g. during the last day of the shelf-life, the display 20 will issue a warning signal. Additionally, the display 20 can e.g. show the remaining time to the expiry of the shelf-life, for example as a countdown. A timer could also be set that determines at which point in time the machine 1 will stop working. Once the shelf-life expires and/or the machine 1 stops, cleaning of the machine 1 becomes necessary. As described above, the cleaning button has to be pressed twice, and the machine 1 can subsequently be cleaned. As shown in fig. 7, once the machine 1 has been cleaned, it can be started again (by providing a new tag 31).

If during any phase of the work flow that has been described with respect to fig. 7 an electrical failure occurs, the machine 1 will remember the status it has been in last. The state of the machine 1 can to this end be continuously saved in a memory during the operation of the machine 1. A timer can be provided with an additional emergency battery so that it can monitor the time, even if an electrical failure occurs. Once the electrical failure is removed, the further operation of the machine 1 depends on the time the machine has been disabled. If the machine has been disabled due to the electrical failure for less than a predetermined failure time, e.g. less than 30 minutes, the machine 1 can resume its operation from where it was stopped by the electrical failure. If the machine has been disabled longer, e.g. longer than 30 minutes, the machine has to be cleaned (cleaning mode).

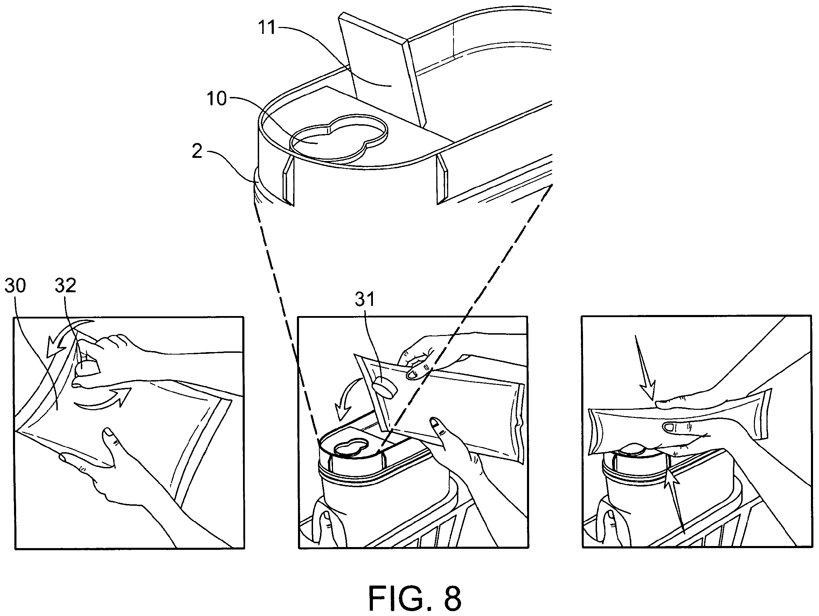

Figure 8 shows how a refilling procedure of the product from a container 30 into the reservoir 2 can be carried out. The container 30 preferably has a mouth 32, which is covered by a cap 33. The cap 33 can, for example, be removed only, if a successful identification of the product according to the identification information that has been transmitted to a beverage production machine 1 is carried out. Once the cap 33 is removed, the container 30 can be attached to the reservoir 2. Therefore, the mouth 32 and the opening 10 of the reservoir 2 can have identical shape, or at least a shape that allows an easy and proper refilling, without product spilling onto the sides or the top of the machine 1. The opening 10 can further have an air inlet, like a bulge or protrusion of the opening to facilitate the refilling procedure of the product. The container 30 is preferably made of a soft squeezable material, like plastic or paper, and the product 30 can be filled into the reservoir 2 by squeezing or otherwise providing pressure to the container 30.

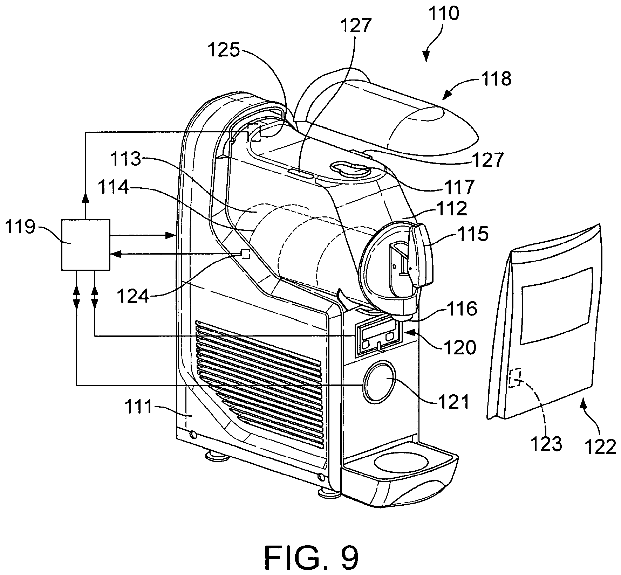

Figure 9 shows a machine for the preparation and delivery of frozen beverages, granita or ice creams, denoted generally by 110, which machine 110 is similar to the machine 1 according to the first embodiment. Hence, it is fully referred to the above description regarding the first embodiment which applies mutatis mutandis to the second embodiment and the other way around. It is noted that the features of the first and second embodiment can be interchangeably used and added to the respective other embodiment. For instance, the following features are identical or at least similar in view of the present invention:
Beverage production machine 1 and machine 110, housing and machine body 111, reservoir 2 and tank 112, agitating means 6 and stirring element or mixer 114, dispenser 3 and tap 115, opening 10 and filling opening 117, lockable lid 11 and closing lid 118, control unit 7 and control unit 119, display 20 and user interface 120 or display 132, RFID reader 4 and acquisition means or sensor 121, container 30 and packet 122, RFID tag 31 and information retention means 123, cooling means 5 and refrigeration system or circuit 131, and shelf life counter 8 and clock/calendar unit 136.

The machine 110 comprises a machine body 111 (like the housing of the first embodiment) on which a tank 112 (like the reservoir 2 of the first embodiment), advantageously made of transparent plastic, is mounted, said tank 112 being intended to receive the product to be delivered and containing in the rear part the evaporator 113 (advantageously in the form of a horizontal-axis cylinder) of a refrigerating system 131 (like the cooling means 5 of the first embodiment) which is contained in the machine body 111 and around which a powered stirring element 114 (like the agitating means 6 of the first embodiment) coaxially rotates. The tank 112 is provided at the front with a tap 115 (like the dispenser 3 of the first embodiment) for delivering the product through a mouth 116 and comprises at the top a filling opening 117 (like the opening 10 of the first embodiment) which is provided with a closing lid 118 (like the lockable lid 11 of the first embodiment). For the cleaning operations, the tank 112 is advantageously removable by means of forwards extraction so as to disengage it at the rear from the hydraulic seal on the wall which extends vertically upwards from the machine body 111 and from which the evaporator 113 with the rotating helical screw projects.

The machine 110 comprises an internal control unit 119 (like the control unit 7 of the first embodiment) advantageously designed with a suitably programmed microprocessor system which manages operation of the machine and which is connected to a user interface 120 (like the display 20 of the first embodiment) which allows the introduction of commands and the display of information.

The control unit 119 (which can be easily imagined by the person skilled in the art on the basis of the description below) comprises means 121 for acquisition of information relating to the shelf life of the product which is introduced into the tank 112.

Advantageously these means 121 comprise a reader which reads this shelf life information directly from information retention means 123 associated with the preparation packet 122 (like the container 30 of the first embodiment) for preparing the product to be delivered. These means 123 will store the information in a format suitable for the type of reader chosen. "Shelf life information or data" is understood as meaning primarily the information which allows the machine to determine how long the product may be used after it has been prepared in the machine. For example, the information may contain the number of hours for which the product is valid following preparation. The control unit 119 may thus store said number of hours, with a decremental count as time passes. The control unit 119, using the shelf life information, controls operation of the machine 110 according to said acquired information.

In a preferred embodiment the sensor 121 is however advantageously designed as an RFID tag reader (like the RFID reader 4 of the first embodiment). The means 123 are in this case designed with a corresponding RFID tag (like the RFID tag 31 of the first embodiment) which is advantageously affixed directly onto the packet (for example underneath a label or inside the wall of the packet). The reader 121 is advantageously positioned on an outer wall of the machine 110, for example on its front part.

By using RFID technology it is possible to store on the packet in a relatively low-cost manner a relatively large amount of information. The information relating to the shelf life, together with other information such as the product type, machine operating parameters for preparing and conserving the specific product (for example, cooling temperature, speed of rotation of the mixer, steps and parameters associated with the initial preparation cycle), final expiry date of the preparation in the packet, etc., may thus be easily stored at the factory in the means 123 for each product packet 122.

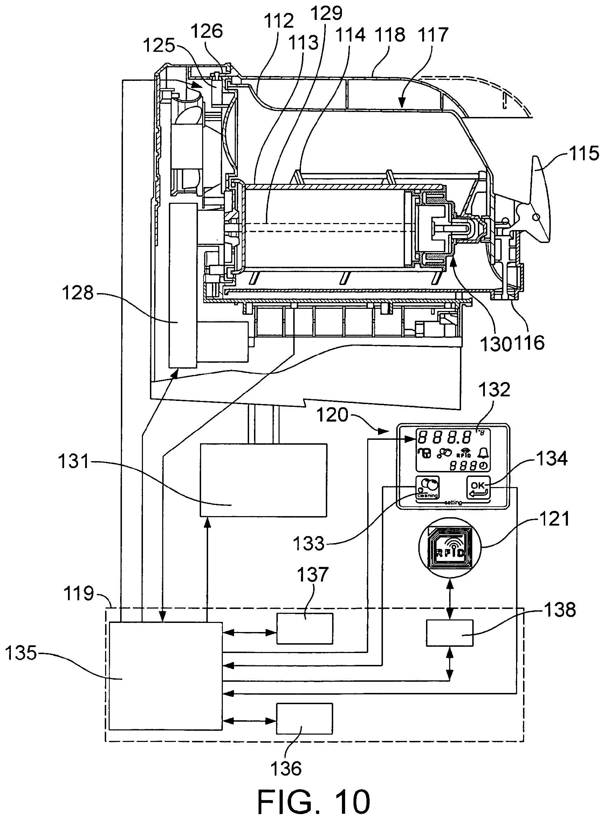

Advantageously, for the purposes which will become clear below, the machine 110 also comprises a sensor 124 (for example a microswitch or other suitable optical sensor, or a magnetic sensor, a touch sensor, a position sensor or any other suitable sensor as described in respect of the first embodiment) for detecting the presence of the tank 112 and an electrically controlled device 125 for locking the lid 118. The locking device 125 may be, for example, an electromagnetically operated bolt, as can be seen more clearly in Figure 10, which spring snap-engages into a locking lug 126 on the back of the lid 118. The lid 118 is advantageously designed so as to be slidable on top of the tank 112 via guide rails 127 which engage inside corresponding grooves (not shown) in the side edges of the lid 118 so that, when the bolt releases the locking lug 126, the lid 118 may be slid forwards until it uncovers the filling inlet 117 of the tank 112 such that it may be removed if necessary.

Figure 10 shows in greater detail a possible advantageous internal structure of the machine 110. According to this structure, the machine 110 comprises a gear motor 128 which is controlled by the control unit 119 and which operates the mixer 114 via a shaft 129. The connection between shaft 129 (coaxial with the cooling cylinder 113) and mixer 114 is advantageously performed by means of a known magnetic coupling 130.

Figure 10 also shows - schematically denoted by 131 - the refrigerating circuit of the machine which is connected to the cooling element in the tank 112 which forms the evaporator 113 of the refrigerating circuit 131. This circuit 131 is known per se and will not be described or illustrated here further. Said circuit 131 is also operationally controlled by the control unit 119 which also comprises known sensors (like the temperature sensor 9 of the first embodiment) for the temperature of the product in the tank 112.

Known product density sensors (not shown) may also be envisaged so as to provide the control unit 119 with data relating to the density of the product at any one time and allow, for example, automatic adjustment of the cooling and/or mixing velocity according to the data detected and the result which is to be obtained (preferably also on the basis of product data detected automatically via the means 123 on the packet). Density detection may be performed for example on the basis of the resistance which is encountered by the mixer 114, as is known and can be easily imagined by the person skilled in the art.

Figure 10 also shows an advantageous embodiment of the user interface 120 which may comprise a display 132 (preferably of the liquid crystal type) and two buttons 133, 134, the first button 133 being an "End of Cycle/washing" button (like the cleaning button 28 of the first embodiment) and the second button 134 being an "OK/confirmation" button (like the confirmation button 27 of the first embodiment). Advantageously, by pressing simultaneously the two buttons 133, 134, it is possible to select further functions, such as display of the temperature scale, and adjust other operating parameters.

Similar to the display 20 as shown in figure 2, the display 120 advantageously shows information such as the temperature of the product in the tank 112 (like the temperature indicator 22 of the first embodiment), the temperature scale (°C or °F) (like the temperature scale indicator of the first embodiment), a timer for the remaining shelf life of the product (for example shown in hours) (like the shelf life indicator 21 of the first embodiment), an icon indicating that the lid 118 is locked/released (like the lid indicator 24 of the first embodiment), a washing request icon (like the cleaning indicator 25 of the first embodiment), a data read icon (like the RFID indicator 26 of the first embodiment), an alarm icon (like the alarm indicator 23 of the first embodiment), a "wrong product" or "product expired" icon, or a timer icon (like the shelf life indicator 21 of the first embodiment). Obviously, the signalling icons on the display 120 may also be replaced by simple indicator lamps (for example LEDs) or may be replaced by an alphanumeric display which shows corresponding plain text signaling messages.

The control unit 119 comprises advantageously a central unit 135, a clock/calendar unit 136, a data memory 137 and an interface unit 138 with the sensor 121 for obtaining the useful data from the read signal. All these units are known per se and can be easily imagined by the person skilled in the art on the basis of the description provided here and will therefore not be further described or shown.

Advantageously the machine 110 comprises three operating modes which may be called "Standby Mode" (like the "Standby Mode" of the first embodiment), "Product Mode" or normal operation mode (like the "Product Mode" of the first embodiment), and "Washing Request Mode" or end-of-delivery mode (like the "Cleaning Mode" of the first embodiment). Reference is also made to Figures 2, 4, 5 and 7 which also apply for the second embodiment; like Figures 1, 3, 6 and 8 do as well.

When switched on or after a washing cycle the machine 110 is in Standby Mode.

In Standby Mode the machine 110 is clean and ready to be filled and to start a Product Mode cycle. Advantageously, in said Standby Mode, cooling is switched off, the mixer 114 does not rotate, the lid 118 is released, the temperature and shelf life indicators 22, 21 are not active and the icon 26 for reading information from a bag 122 flashes in order to signal the need to read data from a product bag 122.

The operator must move the product packet 122 towards the reader 121 and keep the confirmation button 27, 134 pressed. The read icon 26 remains permanently lit during the data read time (for example, about two seconds in the case of RFID) and an acoustic signal confirms that reading has been performed. The read data may be transferred into the memory 137 for future use.

In order to prevent an operator from being able to read the same packet 122 several times even when it has already been used (for example in order to start up again the machine 110 still containing the expired product), the control unit 119 may read from the means 123 a unique identification code for the packet 122 (for example a serial number) and store it so as to be able to identify in future this packet 122 as one which has already been used. Alternatively, in the case of rewritable means 123 (for example a rewritable RFID), the reader 121 may also have write functions and the means 123 may be written so as to mark it as "no longer usable".

After the control unit 119 has read the packet data, switching to Product Mode is enabled. Advantageously, the control unit 119 indicates on the display 120 the shelf life of that particular product on the basis of the data acquired. Moreover, display of the temperature inside the tank is advantageously activated on the display 120. The "lid released" icon 24 starts to flash in order to signal the possibility of filling the tank 112, the mixer 114 starts to rotate and the cooling system 131 is activated.

The operator is thus able to open the lid 118, fill the machine 110 with the contents of the product packet 122, close the lid 118 and press the OK button 27, 134 in order to start operation in Product Mode.

The operating principle of the machine 110 for preparing and conserving the product to be delivered is, in general terms, substantially known from the prior art and will not be described here in detail, being able to be easily imagined by a person skilled in the art.

Advantageously, specific operating parameters for a particular product may be automatically set by the control unit 119 via product data read directly by the reader 121 from the means 123 associated with the packet 122 without further action on the part of the operator. For example, the control unit 119 could contain a table showing speed and temperature values for the various types of product which may be used such that, if the reader 121 reads that the specific product is, for example, granita rather than an ice cream, the mixing speed and cooling temperature will be adjusted depending on the values preset for the specific type of product. Alternatively or in addition, the packet data may contain directly information relating to the cooling temperature and the mixing speed which the machine 110 must adopt for that product.

Advantageously, after the sensor 121 has detected the various data on the packet 122, the timer icon 21 starts to flash so as to indicate that a predefined time (for example 15 or 10 minutes) is available for performing filling. If, within this predefined time, Product Mode is not activated, the machine 110 will return to Standby Mode. This prevents the machine 110 from being left in filling mode for an indefinite period of time, something which could result in subsequent filling errors.

Once the machine 110 switches to Product Mode, the machine 110 remains in operation for a period of time equivalent to the shelf life of the product introduced and it is thus possible to deliver the product (following the initial preparation time for allowing the product to be ready for consumption).

In Product Mode cooling is operational, the mixer 114 rotates, the lid 118 is locked, the temperature indication 22 is active and the control unit 119, on the basis of the amount of time lapsed as indicated by the clock unit, decreases hourly the shelf life indicator 21 in order to show the number of remaining hours.

When the remaining shelf-life hours fall below a predefined value (for example eight hours) the control unit 119 will cause the shelf life hour counter 21 to flash and an intermittent acoustic signal will warn the operator that the shelf life is nearly at an end. By pressing the OK button 27, 134 the acoustic signal may be deactivated.

During use of the machine 110 the operator, in addition to delivering the product, may advantageously also perform said product refilling operations or end-of-cycle operations.

Advantageously, access to the inside of the product tank 112 in the machine 110 for the product refilling operation is prevented if, when the end of the shelf life is reached, a time interval less than a predefined value is not present.

In this way, refilling may be allowed if there is still sufficient shelf life available (for example at least 24 hours still available) so as to allow sufficient delivery of added product before the initial product - even though finished at the time of refilling - reaches the end of its shelf life. This thus also prevents any residual prior product from being able to contaminate the product added during refilling.

In this case, in order to perform the refilling operation, it is advantageously required to move towards the data reader 121 the data retention means 123 of another preparation packet 122 and press the confirmation button 27, 134. The control unit 119 thus reads the data associated with the new packet 122. After lighting up of the read icon 26 for the reading time (for example, two seconds in the case of RFID) and emission of an acoustic signal indicating that reading has been performed, the unit releases the lid 118 and causes flashing of the corresponding signaling icon 24. During refilling, the mixer 114 continues advantageously to rotate and the cooling system 131 continues to function. Reading of the data associated with the packet 122 may help prevent refilling with a product which is not permitted.

The control unit 119 releases the lid 118, allowing opening thereof such that the tank 112 may be filled with the contents of the new product packet 122, the lid 118 closed and the OK confirmation button 27, 134 pressed in order to signal to the machine 110 that operation in Product Mode may be resumed.

For safety reasons, during the refilling step, the timer icon 21 flashes to indicate that a predefined time (for example 15 or 10 minutes) is available in order to perform filling, following which, if Product Mode has not been activated, the machine 110 returns to Standby Mode.

Advantageously, if the product has been used up, but the shelf life is nearly at its end (for example less than 24 hours available), the machine 110 prevents the refilling operation since, owing to the residual product which inevitably remains inside the machine 110, it is advisable to wash the machine 110 before filling it again.

In this case, the operator may force termination of the operating cycle, without waiting for expiry of the shelf life by pressing the washing button 28, 133 and confirming the selection using the OK button 27, 134. The control unit 119 thus switches to the end-of-cycle step and the machine 110 assumes the Washing Request Mode.

The machine 110 instead automatically switches to the end-of-delivery state, namely assumes Washing Request Mode, when the end of the product shelf life is reached.

In both cases it is required at this point to perform washing of the machine 110 so that the machine 110 may return again into Standby Mode, ready to perform a new operating cycle. In order to have the certainty that washing has been correctly performed, the control unit 119 checks, via the sensor 124, that the tank 112 has been removed for a certain predefined amount of time (which is for example predefined as being the time required for the operator to perform a suitable washing operation).

Advantageously, when the machine 110 is in Washing Request Mode, cooling is deactivated, the mixer 114 continues to rotate, the lid 118 is released and the Washing Request icon 25 lights up.

In addition to the various operating modes or steps described above, the machine 110 may advantageously comprise various alarm signals for signalling an anomalous condition to the operator.

For example, if during operation in Product Mode, for example following a power blackout, the temperature rises above the safety level for the particular product introduced (usually the safety level is around 0°C) for a certain set period of time, such as to result in a probable deterioration of the product, the control device lights up the alarm icon 23, automatically interrupts the normal operation cycle and switches to Washing Request Mode.

In addition to reading of the information relating to the shelf life of the ready product, the means 123 associated with the packet 122 may also advantageously contain information relating to the final expiry date of the product packet 122.

Thus, if a product packet 122 is read as having an expiry date before the current date (stored in the machine 110 by the clock/calendar unit 136 inside the control unit 119), operation is not activated and the machine 100 signals a fault, for example showing on the display a product expired icon and the expiry date, optionally also emitting an acoustic signal.

The means 123 associated with the packet 122 may also advantageously contain information relating to the specific product. For example, a product identification code may be memorized so that the control unit 119 may store the product identification code before the machine 110 is filled and compare it with the code of a new packet 122 at the start of the refilling step, so as to prevent (by keeping the lid 118 locked) refilling with a product different from the one already present in the machine 110. The control unit 119 may advantageously also cause a "wrong product" icon to flash on the display 120.

At this point it is clear how the predefined objects have been achieved. With the machine 110 according to the invention it is possible to operate the machine 110 so as to deliver product only during the validity period of the product introduced, disabling the fully functional state of the machine 110 (namely normal operation with delivery of the product) when the end of the shelf life of the product in the machine 110 is reached. Moreover, the steps for adding fresh product to the product and the washing steps prior to a new filling operation may be easily monitored so as to prevent unauthorized use of the machine 110 with the consequent risks for the health of the product users.

In summary the present invention discloses a beverage production machine 1, 110. Also disclosed are a beverage production and a control method, and a container/packet 30, 122 for a product that is to be filled into the beverage production machine 1, 110. The invention aims to improve the hygiene of beverage production. By reading wirelessly identification information and shelf-life information from an RFID tag 31, 123 or bar code or the like in the container 30, 122 by an RFID reader 4, 121 or the like of the machine 1, 110, the machine 1, 110 can ensure that only known products are used, and that only products, which have not yet reached their expiration date, are used. The invention further simplifies a monitoring of the shelf-life of a product, and improves the operability, particularly the refilling, of beverage production machines 1, 110.
Obviously, the above description of the embodiments applying the innovative principles of the present invention is provided by way of example of these innovative principles and must therefore not be regarded as limiting. For example, the machine 1, 110 may have a different form and the single component parts may vary depending on specific requirements. The information retention means 123 or RFID tag 4 may also be directly inside or on the container or packet 30, 122, but may also not be associated with the container or packet 30, 122 as an element separate from the container or packet 30, 122 and fastened thereto (for example in the form of a label, tag or the like attached to the container or packet 30, 122).
Herein "product preparation" is understood as meaning any known packaged product which is used in the machine 1, 110 in order to obtain the product to be delivered. For example, in addition to preparations to which water, milk or the like must be added (inside the tank 2, 112 or prior to introduction inside the tank 2, 112), the preparation may advantageously also be simply introduced into the tank 2, 112 without further additions in order to obtain the final product. In particular, preparation packets 30, 122 are known where the product contained in them is in the frozen state ready to use, it being merely required to defrost the preparation, even only partially, before introducing it into the machine tank 2, 112 and subjecting it to the mechanical action of the stirring element 6, 114 in order to obtain the product ready for delivery.

It is again noted that the features of the first and second embodiment can be combined and/or interchangeably provided and are not limited to the particular embodiment. In other words, all the features shown and described in the respective embodiments do also apply for and can be added to the respective other embodiment the same way and in any combination as long as being covered by the appended claims.

## Claims

1. Machine (1, 110) for production and delivery of ice cream, frozen drinks or granita starting from a packet (30, 122) of preparation associated with such a machine to obtain the product, comprising a tank (2, 112) for containing the product provided with a tap (3, 115) for delivering the product and in which there are an element (5, 131, 113) cooling the product and a powered mixer element (6, 114) for stirring the product,
**characterized in that**
it comprises a control unit (7, 119) which is provided with means (4, 121) for the acquisition of information on the shelf life of the product, once it is obtained from the preparation, from means (31, 123) of retention of information which are associated with the packet of preparation (30, 122), the control unit (7, 119) controlling the operation of the machine (1, 110) according to the information acquired, and **in that** the control unit (7, 119) includes a clock/calendar unit (8, 136) and is connected to the powered mixer element (6, 114) and a refrigerant circuit (5, 131) of the cooling element (5, 131, 113) for operating the stop of at least one of these when the clock / calendar unit (8, 136) reaches the end of the product shelf life which is obtained from the information acquired, and **characterized in that** the means (4, 121) of acquisition include a reader of RFID tags (4, 121) and the means of retention of information (31, 123) include a corresponding RFID tag (31, 123) containing said information.

2. Machine (1, 110) according to claim 1, **characterized in that** it comprises a display (20, 120, 132) for displaying the remaining shelf life of the product.

3. Machine (1, 110) according to any one of claims 1 or 2, **characterized in that** it comprises a lid (11, 118) closing of the tank (2, 112) and a electrically driven device (125) for blocking the opening of the lid (11, 118) which is connected to the control unit (7, 119) for the command.

4. Machine (1, 110) according to any one of claims 1 to 3, **characterized in that** the tank (2, 112) is made removable and a tank presence sensor (124) is present and connected to the control unit (7, 119) for detecting the removal of the tank (2, 112).

5. Machine (1, 110) according to any one of claims 1 to 4, **characterized in that**, by means of the control unit (7, 119), it includes at least one standby state, a normal operating state and an end delivery state, the switching between standby state and normal state being enabled by the acquisition of the information on the product shelf life from a packet (30, 122) and the switching between normal operation state and end delivery state being controlled automatically by reaching the end of such shelf life.

6. Machine (1, 110) according to claims 1 to 5, **characterized in that** the switching between the end delivery state, and standby state is enabled by the tank presence sensor (124) detecting the removal of the tank (2, 112) for a time at least equal to a preset time.

## Patentansprüche

1. Maschine (1, 110) zur Herstellung und Abgabe von Eiscreme, gefrorenen Getränken oder Granita, ausgehend von einem Paket (30, 122) der Zubereitung im Zusammenhang mit einer solchen Maschine zum Erhalten des Produkts, umfassend einen Tank (2, 112), der das Produkt enthält und mit einem Zapfhahn (3, 115) zum Abgeben des Produkts versehen ist und in dem ein Element (5, 131, 113), das das Produkt kühlt, und ein elektrisch angetriebenes Mischelement (6, 114) zum Rühren des Produkts vorliegen,
**dadurch gekennzeichnet, dass**
sie eine Steuereinheit (7, 119) umfasst, die mit einem Mittel (4, 121) zum Erlangen von Informationen zur Haltbarkeitsdauer des Produkts, sobald es aus der Zubereitung erhalten wurde, von einem Mittel (31, 123) zum Bewahren von Informationen versehen ist, die dem Paket der Zubereitung (30, 122) zugeordnet sind, wobei die Steuereinheit (7, 119) den Betrieb der Maschine (1, 110) gemäß den erlangten Informationen steuert, und
die Steuereinheit (7, 119) eine Uhr-/Kalendereinheit (8, 136) einschließt und mit dem elektrisch angetriebenen Mischelement (6, 114) und einem Kühlmittelkreis (5, 131) des Kühlelements (5, 131, 113) verbunden ist, um das Anhalten von mindestens einem derselben zu veranlassen, wenn die Uhr-/Kalendereinheit (8, 136) das Ende der Produkthaltbarkeitsdauer erreicht, die aus den erlangten Informationen erhalten wird,
und **dadurch gekennzeichnet, dass** das Mittel (4, 121) der Erlangung eine Lesevorrichtung für RFID-Tags (4, 121) einschließt und das Mittel zum Bewahren der Informationen (31, 123) einen entsprechenden RFID-Tag (31, 123) einschließt, der die Informationen enthält.

2. Maschine (1, 110) nach Anspruch 1, **dadurch gekennzeichnet, dass** sie eine Anzeige (20, 120, 132) zum Anzeigen der Resthaltbarkeitsdauer des Produkts umfasst.

3. Maschine (1, 110) nach einem der Ansprüche 1 oder 2, **dadurch gekennzeichnet, dass** sie einen Deckel (11, 118), der den Tank (2, 112) verschließt, und eine elektrisch angetriebene Vorrichtung (125) zum Blockieren der Öffnung des Deckels (11, 118) umfasst, die für den Befehl mit der Steuereinheit (7, 119) verbunden ist.

4. Maschine (1, 110) nach einem der Ansprüche 1 bis 3, **dadurch gekennzeichnet, dass** der Tank (2, 112) entnehmbar gebildet ist und ein Tankanwesenheitssensor (124) vorliegt und mit der Steuereinheit (7, 119) verbunden ist, um das Entnehmen des Tanks (2, 112) zu erkennen.

5. Maschine (1, 110) nach einem der Ansprüche 1 bis 4, **dadurch gekennzeichnet, dass** sie mittels der Steuereinheit (7, 119) mindestens einen Bereitschaftszustand, einen Normalbetriebszustand und einen Abgabebeendigungszustand einschließt, wobei das Umschalten zwischen dem Bereitschaftszustand und dem Normalbetriebszustand durch das Erlangen der Informationen zur Produkthaltbarkeitsdauer von einem Paket (30, 122) aktiviert wird und das Umschalten zwischen dem Normalbetriebszustand und dem Abgabebeendigungszustand automatisch durch Erreichen des Endes dieser Haltbarkeitsdauer gesteuert wird.

6. Maschine (1, 110) nach den Ansprüchen 1 bis 5, **dadurch gekennzeichnet, dass** das Umschalten zwischen dem Abgabebeendigungszustand und dem Bereitschaftszustand aktiviert wird, indem der Tankanwesenheitssensor (124) das Entnehmen des Tanks (2, 112) für eine Zeit erkennt, die mindestens gleich einer voreingestellten Zeit ist.

## Revendications

1. Machine (1, 110) pour la production et la distribution de crème glacée, de boissons glacées ou de granités en commençant avec un paquet (30, 122) de préparation associé à une telle machine pour obtenir le produit, comprenant un réservoir (2, 112) pour contenir le produit, comprenant un robinet (3, 115) pour distribuer le produit et dans lequel se trouvent un élément (5, 131, 113) refroidissant le produit et un élément de mélangeur motorisé (6, 114) pour agiter le produit,
**caractérisée en ce que**
elle comprend une unité de commande (7, 119) qui comprend des moyens (4, 121) pour l'acquisition d'informations sur la durée de conservation du produit, une fois qu'il est obtenu à partir de la préparation, à partir de moyens (31, 123) de rétention d'informations qui sont associés au paquet de préparation (30, 122), l'unité de commande (7, 119) commandant le fonctionnement de la machine (1, 110) en fonction des informations acquises et
**en ce que** l'unité de commande (7, 119) comprend une unité de calendrier/horloge (8, 136) et est reliée à l'élément de mélangeur motorisé (6, 114) et à un circuit de fluide frigorifique (5, 131) de l'élément de refroidissement (5, 131, 113) pour faire fonctionner l'arrêt d'au moins un de ceux-ci lorsque l'unité de calendrier/horloge (8, 136) atteint la fin de la durée de conservation du produit qui est obtenue à partir des informations acquises,
et **caractérisée en ce que** les moyens (4, 121) d'acquisition comprennent un lecteur d'étiquettes RFID (4, 121) et les moyens de rétention d'informations (31, 123) comprennent une étiquette RFID (31, 123) correspondante contenant lesdites informations.

2. Machine (1, 110) selon la revendication 1, **caractérisée en ce qu'**elle comprend un affichage (20, 120, 132) pour afficher la durée de conservation restante du produit.

3. Machine (1, 110) selon l'une quelconque des revendications 1 ou 2,
**caractérisée en ce qu'**elle comprend un couvercle (11, 118) fermant le réservoir (2, 112) et un dispositif à entraînement électrique (125) pour bloquer l'ouverture du couvercle (11, 118) qui est connecté à l'unité de commande (7, 119) pour la commande.

4. Machine (1, 110) selon l'une quelconque des revendications 1 à 3,
**caractérisée en ce que** le réservoir (2, 112) est conçu amovible et un capteur de présence de réservoir (124) est présent et connecté à l'unité de commande (7, 119) pour détecter le retrait du réservoir (2, 112).

5. Machine (1, 110) selon l'une quelconque des revendications 1 à 4,
**caractérisée en ce que,** au moyen de l'unité de commande (7, 119), elle comprend au moins un état de veille, un état de fonctionnement normal et un état de distribution finale, la commutation entre l'état de veille et l'état normal étant activée par l'acquisition des informations sur la durée de conservation du produit à partir d'un paquet (30, 122) et la commutation entre l'état de fonctionnement normal et l'état de distribution finale étant commandée automatiquement en atteignant la fin d'une telle durée de conservation.

6. Machine (1, 110) selon les revendications 1 à 5, **caractérisée en ce que** la commutation entre l'état de distribution finale et l'état de veille est activée par le capteur de présence de réservoir (124) qui détecte le retrait du réservoir (2, 112) pendant une durée au moins égale à une durée prédéfinie.
